# EUROPÄISCHE PATENTSCHRIFT

(11) **EP 2 999 885 B1**
(45) Veröffentlichungstag und Bekanntmachung des Hinweises auf die Patenterteilung: **06.12.2017**
(21) Anmeldenummer: 14710498.8
(22) Anmeldetag: 12.03.2014
(51) Int. Cl.: F04B 1/32, F04B 49/08

(54) **AXIALKOLBENPUMPE IN SCHRÄGSCHEIBENBAUART**
AXIAL PISTON MACHINE OF SWASH PLATE TYPE
MACHINE À PISTON AXIAL DU TYPE À PLATEAU EN BIAIS

(30) Priorität: 22.05.2013 DE 102013008681; 22.05.2013 DE 102013008678; 22.05.2013 DE 102013008629; 22.05.2013 DE 102013008679; 22.05.2013 DE 102013008676; 22.05.2013 DE 102013008677
(43) Veröffentlichungstag der Anmeldung: 30.03.2016
(73) Patentinhaber: Hydac Drive Center GmbH, 89129 Langenau (DE)
(72) Erfinder: BOSCH, Ralf, 89177 Börslingen (DE); KRONPASS, Manuel, 94104 Tittling (DE)
(74) Vertreter: Bartels, Martin Erich Arthur
(86) Internationale Anmeldenummer: PCT/EP2014/000658
(87) Internationale Veröffentlichungsnummer: WO 2014/187512

(56) Entgegenhaltungen:
- EP-A1- 0 554 537
- EP-A2- 0 922 858
- DE-A1- 1 653 617
- DE-A1-102007 022 569
- DE-A1-102011 006 102
- US-A- 2 915 985
- US-A- 3 093 081

## Beschreibung

Die Erfindung betrifft eine Axialkolbenpumpe in Schrägscheibenbauart, insbesondere für Hydraulikanlagen, mit den Merkmalen im Oberbegriff von Anspruch 1.

Axialkolbenpumpen in Schrägscheibenbauart sind Stand der Technik. Sie finden verbreitet Einsatz für die Druckmittelversorgung von Verbrauchern wie Arbeitszylindern, Hydromotoren und dergleichen. Axialkolbenpumpen der eingangs genannten Gattung, bei denen die Schrägscheibe in ihrer Neigung gegenüber der Drehachse verstellbar ist, zeichnen sich gegenüber ebenfalls bekannten Axialkolbenpumpen mit feststehender Schrägscheibe durch eine bessere Energiebilanz im Betrieb aus. Während Pumpen mit feststehender Schrägscheibe als Konstantpumpe bei vorgegebener Antriebsdrehzahl stets einen konstanten Volumenstrom des Fluids fördern, auch wenn keine Energie von druckmittelbetätigten Aggregaten angefordert wird und daher im Leerlauf die Strömungswiderstände im Hydraulikkreislauf überwunden werden müssen, wofür Antriebsenergie aufgewendet wird, die keine Nutzenergie liefert, ist durch die Verstellmöglichkeit der Schrägscheibenneigung das Fördervolumen auf Null einstellbar und der Bedarf an Antriebsenergie minimierbar. Eine Axialkolbenpumpe der eingangs genannten Art ist in dem Dokument DE 44 15 510 C1 offenbart.

Die Herstellung der bekannten Axialkolbenpumpen dieser Gattung ist kostenintensiv, weil für die Verstelleinrichtung mit der getrieblichen Verbindung, die die Linearbewegung des Kolbens des feststehenden Stellzylinders in eine bogenförmige Bewegung der Schrägscheibe umwandelt, ein erheblicher konstruktiver Aufwand erforderlich ist.

Die DE 16 53 617 beschreibt eine Axialkolbenpumpe in Schrägscheibenbauart, insbesondere für Hydraulikanlagen, mit einer in einem Pumpengehäuse um eine Drehachse rotierend antreibbaren Zylindertrommel, in der Kolben axial bewegbar angeordnet sind, die sich mit ihrem außerhalb der Zylindertrommel zugänglichen Betätigungsende an einer Schrägscheibe zumindest mittelbar abstützen, die zur Einstellung des Hubes der Kolben und damit des durch diese erzeugten Fluid-Systemdrucks in gewünschte Neigungswinkel relativ zur Drehachse mittels einer Verstelleinrichtung schwenkbar ist, die in einem hydraulisch betätigbaren Stellzylinder einen Stellkolben aufweist, dessen Bewegung über mindestens eine eine Gelenkstelle aufweisende getriebeartige Verbindung auf die Schrägscheibe übertragbar ist, wobei die Gelenkstelle durch ein zwischen Kolben und Kolbenstange des Stellzylinders befindliches Kugelgelenk gebildet ist, wobei eine zweite Gelenkstelle durch ein zweites Kugelgelenk zwischen der Kolbenstange und einem Betätigungsteil der Schrägscheibe gebildet ist, wobei ein zweiter Stellzylinder vorhanden ist, der mit gemeinsamer, zur Drehachse senkrechter Zylinderachse dem ersten Stellzylinder gegenüberliegt, wobei der Stellkolben des zweiten Stellzylinders hydraulisch entgegen der Bewegung des Stellkolbens des ersten Stellzylinders bewegbar ist und wobei die Kolbenstange des zweiten Stellzylinders am einen Ende über ein drittes Kugelgelenk mit dem zugehörigen Stellkolben in Verbindung ist und am anderen Ende zusammen mit der Kolbenstange des ersten Stellzylinders das zweite Kugelgelenk am Betätigungsteil der Schrägscheibe ausbildet.

Weitere Axialkolbenmaschinen gehen aus der EP 0 554 537 A1, der DE 10 2007 022 569 A1, der EP 0 922 858 A2, der US 2 915 985 und der US 3 093 081 hervor.

Im Hinblick auf diese Problematik stellt sich die Erfindung die Aufgabe, eine Axialkolbenpumpe zur Verfügung zu stellen, deren Verstelleinrichtung für die Lageeinstellung der Schrägscheibe sich bei vergleichsweise einfacherem Aufbau durch eine hohe Betriebssicherheit auszeichnet.

Erfindungsgemäß ist diese Aufgabe durch eine Axialkolbenpumpe gelöst, die die Merkmale des Patentanspruchs 1 in seiner Gesamtheit aufweist.

Danach besteht eine wesentliche Besonderheit der Erfindung darin, dass das Kugelgelenk am Betätigungsteil, welches in Form eines mit der Schrägscheibe verbundenen Schwenkhebels gebildet ist, durch einen am freien Ende des Schwenkhebels befindlichen Kugelkopf und durch kalottenförmige Flächen gebildet ist, die an den zugeordneten Enden der Kolbenstangen ausgebildet sind und Kugelpfannen bilden.

Es ist ferner vorgesehen, dass die Gelenkstelle der getrieblichen Verbindung zwischen Schrägscheibe und Stellzylinder durch ein zwischen Kolben und Kolbenstange des Stellzylinders befindliches Kugelgelenk gebildet ist. Im Unterschied zu einer eine Gelenkachse definierenden Gelenkverbindung ist dank der Ausbildung der Gelenkstelle in Form eines Kugelgelenks der Kolben frei von Zwangskräften.

Dies führt zu geringerer Bauteilbeanspruchung, geringerer Kolbenreibung mit entsprechend geringerem Verschleiß und zu einer entsprechend verbesserten Betriebssicherheit. Es ist eine zweite Gelenkstelle der getrieblichen Verbindung durch ein zweites Kugelgelenk zwischen der Kolbenstange und einem Betätigungsteil der Schrägscheibe gebildet, wodurch sich entsprechende Vorteile an der der Schrägscheibe zugeordneten Koppelstelle ergeben.

Die über die Kugelgelenke gebildete getriebliche Verbindung lässt sich völlig spielfrei gestalten, indem eine Kugelkopf und Kugelpfanne der Kugelgelenke kraftschlüssig in Anlage haltende Federanordnung vorgesehen ist. Dabei kann die Anordnung mit Vorteil derart getroffen sein, dass die Federanordnung gleichzeitig die Schrägscheibe in die der maximalen Pumpenförderung entsprechende Schwenkstellung vorspannt. Durch diese Doppelfunktion der Federanordnung braucht der Stellzylinder nicht als doppelt wirkender Zylinder für die Erzeugung von Stellbewegungen in beide Richtungen ausgelegt zu sein, sondern es kann ein einfach wirkender Stellzylinder vorgesehen sein, der lediglich eine Stellbewegung aus der Schwenkstellung für maximale Pumpenförderung hin zu geringem Fördervolumen bis zu Null-Förderung hin bewirkt. Es ist ein zweiter Stellzylinder vorhanden, der mit gemeinsamer, zur Drehachse senkrechter Zylinderachse dem ersten Stellzylinder gegenüberliegt, wobei der Stellkolben des zweiten Stellzylinders hydraulisch entgegen der Bewegung des Stellkolbens des ersten Stellzylinders bewegbar ist und die Kolbenstange des zweiten Stellzylinders am einen Ende über ein drittes Kugelgelenk mit dem zugehörigen Stellkolben in Verbindung ist und am anderen Ende zusammen mit der Kolbenstange des ersten Stellzylinders das zweite Kugelgelenk am Betätigungsteil der Schrägscheibe ausbildet.

Das Betätigungsteil kann in vorteilhafter Weise durch einen mit der Schrägscheibe verbundenen Schwenkhebel gebildet sein, der sich seitlich der Schrägscheibe und der Zylindertrommel bei der Einstellung auf Null-Pumpenförderung parallel zur Drehachse erstreckt und an dessen freiem Ende sich das zweite Kugelgelenk befindet. Bei dieser Anordnung kann die Zylinderachse der Stellzylinder quer zur Drehachse ausgerichtet sein, um über das am Ende des Schwenkhebels befindliche Kugelgelenk den Schwenkhebel und damit die Schrägscheibe um eine Schwenkachse zu bewegen, die senkrecht zur Drehachse innerhalb der Ebene der Gleitfläche verläuft, an der sich die Kolben der Zylindertrommel an der Schrägscheibe abstützen.

In besonders vorteilhafter Weise kann die Federanordnung eine Druckfeder aufweisen, die die Kolbenstange des zweiten Stellzylinders für die Bewegung vorspannt, die dem Ausfahren des Stellkolbens des zweiten Stellzylinders und dem Einfahren des Stellkolbens des ersten Stellzylinders und damit dem Schwenken des Schwenkhebels aus der achsparallelen Stellung in Richtung auf die Stellung der maximalen Pumpenförderung entspricht.

Hinsichtlich der Betätigung der Verstelleinrichtung kann die Anordnung mit Vorteil so getroffen sein, dass der erste Stellzylinder mit einem Steuerdruck für die Einstellung der Pumpenförderung und der zweite Stellzylinder mit dem herrschenden Systemdruck beaufschlagbar sind. Dadurch ist die Verstelleinrichtung bei fehlendem Systemdruck durch die Kraft der Druckfeder auf die Maximal-Förderung eingestellt. Beim Betrieb der Pumpe mit sich ergebendem Systemdruck bleibt die Einstellung auf Maximal-Förderung so lange beibehalten, bis die durch den Steuerdruck im ersten Stellzylinder erzeugte Stellkraft die vom Systemdruck im zweiten Stellzylinder erzeugte Kolbenkraft, zuzüglich der Federkraft, übersteigt, wonach, vom Steuerdruck abhängig, die Schrägscheibe auf geringere Förderleistung zurückgeschwenkt wird.

Für einen Betrieb mit einem Steuerdruck begrenzten Druckniveaus ist vorzugsweise die vom Steuerdruck beaufschlagbare Kolbenfläche des Kolbens des ersten Stellzylinders größer gewählt als die vom Systemdruck beaufschlagbare Kolbenfläche des Kolbens des zweiten Stellzylinders. Nachstehend ist die Erfindung anhand eines in der Zeichnung dargestellten Ausführungsbeispiels im Einzelnen erläutert. Es zeigen:
- Fig. 1: eine Seitenansicht lediglich der mit der Verstelleinrichtung der Schrägscheibe in Bezug stehenden Komponenten eines Ausführungsbeispiels der erfindungsgemäßen Axialkolbenpumpe, wobei Stellzylinder der Verstelleinrichtung geschnitten dargestellt sind;
- Fig. 2: einen Längsschnitt des Ausführungsbeispiels mit durch die Verstelleinrichtung verlaufender Schnittebene; und

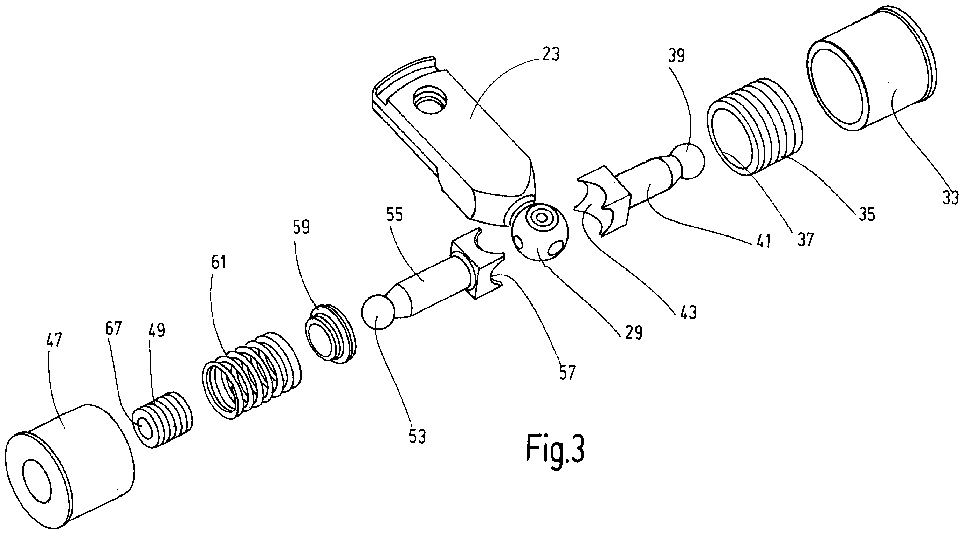

- Fig. 3: in explosionsartiger, auseinandergezogener, perspektivischer Schrägansicht die Komponenten der Verstelleinrichtung des Ausführungsbeispiels.

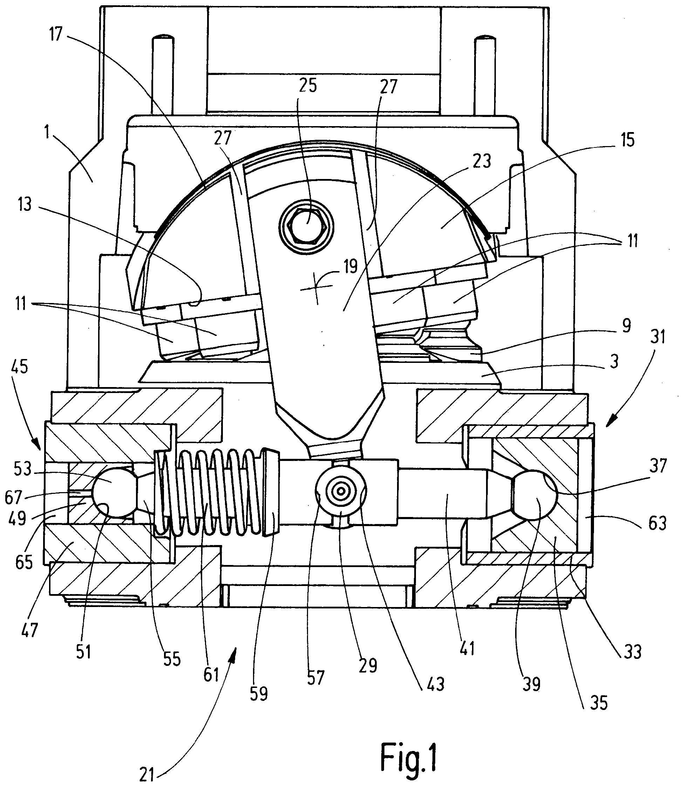

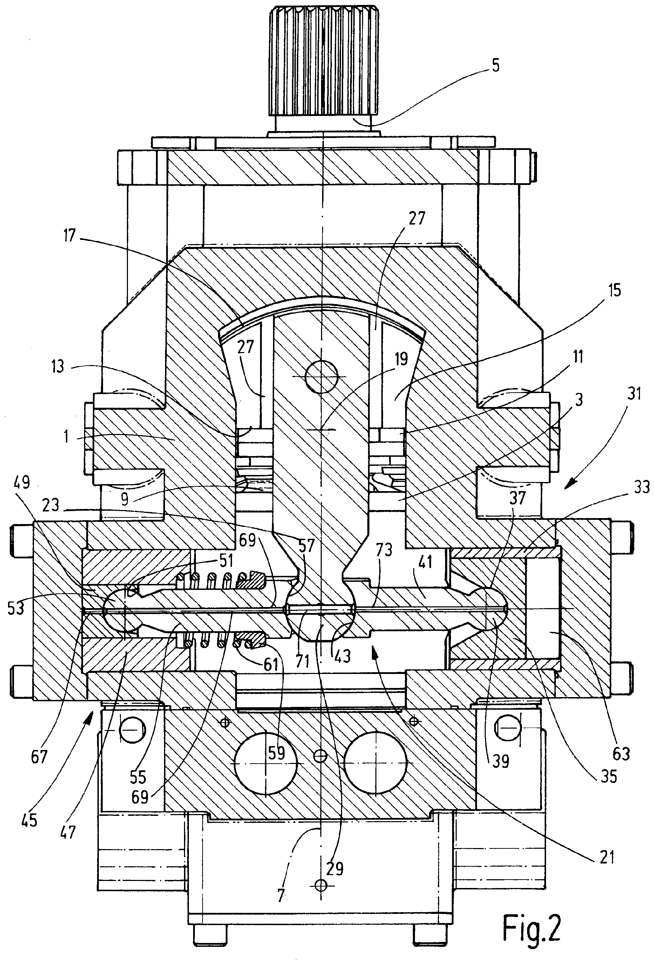

Die Fig. 1 zeigt von dem zu beschreibenden Ausführungsbeispiel lediglich einen Teil eines Pumpengehäuses 1, das in Fig. 2 vollständiger sichtbar ist. Im Gehäuse 1 ist eine Zylindertrommel 3 gelagert, die, siehe Fig. 2, mittels einer Antriebswelle 5 um eine Drehachse 7 drehbar ist. In der bei Axialkolbenpumpen üblichen Weise stützen sich die in der Zylindertrommel 3 axial bewegbaren Kolben 9 über an ihren oberen Enden befindliche Gleitschuhe 11 an der Gleitfläche 13 einer Schrägscheibe 15 ab. Diese ist an ihrer von der Gleitfläche 13 abgewandten Seite über eine kreisbogenförmige Schrägscheibenlagerung 17 am Pumpengehäuse 1 derart bewegbar geführt, dass die Schrägscheibe 15 um eine Schwenkachse 19 schwenkbar ist, die, zur Drehachse 7 senkrecht verlaufend, in der Ebene der Gleitfläche 13 der Schrägscheibe 15 liegt. Mittels einer in Fig. 1 als Ganzes mit 21 bezeichneten Verstelleinrichtung ist die Schrägscheibe 15 um die Schwenkachse 19 zwischen der in Fig. 1 gezeigten, geschwenkten Einstellung, die der maximalen Förderleistung der Pumpe entspricht, und der in Fig. 2 gezeigten Einstellung auf Null-Förderung schwenkbar, wobei sich hier die Ebene der Gleitfläche 13, bezogen auf den vertikalen Verlauf der Drehachse 7 von Fig. 2, in der Horizontalen befindet, so dass kein Hub der Kolben 9 bei der Rotation der Zylindertrommel 3 erfolgt.

Als der Schrägscheibe 15 zugeordnetes Betätigungsteil weist die Verstelleinrichtung 21 einen Schwenkhebel 23 auf, der mittels einer Schraube 25 an der Schrägscheibe 15 zwischen zwei an deren Seitenfläche vorstehenden Rippen 27 befestigt ist. Der sich seitlich der Zylindertrommel 3 erstreckende Schwenkhebel 23 weist an seinem unteren, freien Ende einen Kugelkopf 29 auf, an dem Stellglieder der Verstelleinrichtung 21 angreifen, um den Schwenkhebel 23 in der Zeichnungsebene zu bewegen und damit die Schrägscheibe 15 um die Schwenkachse 19 zu verschwenken.

Die Verstelleinrichtung 21 weist einen ersten Stellzylinder 31 mit einer Zylinderbuchse 33 auf, in der ein Stellkolben 35 geführt ist. Der Kolben 35 weist eine innere Kugelpfanne 37 auf, um zusammen mit einem Kugelkopf 39 am Ende einer zugehörigen Kolbenstange 41 ein erstes Kugelgelenk zu bilden. An dem dem Kolben 35 entgegengesetzten Ende der Kolbenstange 41 ist eine Kugelpfanne 43 ausgebildet. Dem ersten Stellzylinder 31 entgegengesetzt und mit diesem auf gemeinsamer Zylinderachse liegend, weist die Verstelleinrichtung 21 einen zweiten Stellzylinder 45 mit einer Zylinderbuchse 47 auf. In dieser ist ein zweiter Kolben 49 geführt, der eine kleinere druckbeaufschlagbare Kolbenfläche als der gegenüberliegende erste Kolben 35 aufweist. Wie beim ersten Kolben 35 ist im weiteren Kolben 49 eine Kugelpfanne 51 ausgebildet, die zusammen mit einem Kugelkopf 53 an der zugehörigen Kolbenstange 55 ein weiteres Kugelgelenk ausbildet. Das vom Kugelkopf 53 abgekehrte Ende der Kolbenstange 55 weist, wie dies bei der Kolbenstange 41 des ersten Stellzylinders 31 der Fall ist, eine Kugelpfanne 57 auf, die zusammen mit der Kugelpfanne 43 der anderen Kolbenstange 41 und dem Kugelkopf 29 am Schwenkhebel 23 ein dem Schwenkhebel 23 zugehöriges Kugelgelenk ausbildet. Zwischen der Zylinderbuchse 47 des zweiten Stellzylinders 45 und einem Federteller 59 der Kolbenstange 55 ist eine Druckfeder 61 eingespannt, die die Verstelleinrichtung 21 in die in Fig. 1 gezeigte, der maximalen Pumpenförderung entsprechende Einstellung vorspannt und außerdem Kugelköpfe und Kugelpfannen der drei gebildeten Kugelgelenke spielfrei in Anlage aneinanderhält.

Für die Betätigung der Stelleinrichtung 21 ist der Druckraum 63 des ersten Stellzylinders 31 mit einem die Förderleistung bestimmenden Steuerdruck beaufschlagbar. Der Druckraum 65 des zweiten Stellzylinders 45 ist mit dem im Betrieb von der Pumpe erzeugtem Systemdruck beaufschlagt. Die Kraft der Druckfeder 61, die die Kolbenstangen 41, 55 für eine Bewegung nach rechts (entsprechend der Darstellung der Zeichnung) vorspannt, hält die Verstelleinrichtung bei Stillstand der Pumpe und daher fehlendem Systemdruck im zweiten Stellzylinder 45 in der in Fig. 1 gezeigten Einstellung auf maximale Förderleistung. Um die Pumpe im Betrieb auf eine geringere Förderleistung, gegebenenfalls auf Null-Förderung (diese Einstellung ist in Fig. 2 gezeigt), einzustellen, wird der erste Stellzylinder 31 mit einem entsprechenden Steuerdruck versorgt. Sobald die vom Steuerdruck im ersten Stellzylinder 31 erzeugte Kolbenkraft die aus der Federkraft und der Kolbenkraft des vom Systemdruck beaufschlagten Kolbens 49 des zweiten Stellzylinders 35 kombinierte Gesamtkraft übersteigt, wird der Schwenkhebel 23 aus der in Fig. 1 gezeigten Maximal-Förderstellung nach links in die entsprechende Steuerstellung bewegt. Um diese Einstellbewegungen mit einem Steuerdruck mit einem verhältnismäßig niedrigen Druckniveau zu veranlassen, ist die wirksame Kolbenfläche am Kolben 35 des ersten Stellzylinders 31 wesentlich größer gewählt als bei dem Kolben 49 des zweiten Stellzylinders.

Wie insbesondere aus Fig. 2 zu ersehen ist, ist in dem vom Systemdruck beaufschlagbaren Kolben 49 eine Bohrung 67 gebildet. Diese bildet den Eingang eines Schmiermittelkanals, der sich über einen Durchgang 69 in der Kolbenstange 55, eine Bohrung 71 im Kugelkopf 29 des Schwenkhebels 23 und einen Durchgang 73 in der anderen Kolbenstange 41 bis zum Kugelgelenk am Kolben 35 des ersten Stellzylinders 31 fortsetzt. Dadurch gelangt das unter Systemdruck stehende Druckfluid, insbesondere in Form eines Hydrauliköls mit Schmiereigenschaft, als Schmiermittel zu sämtlichen Lagerflächen aller Kugelgelenke, so dass die Verstelleinrichtung 21 verschleißfrei, reibungsarm und betriebssicher arbeitet.

## Patentansprüche

1. Axialkolbenpumpe in Schrägscheibenbauart, insbesondere für Hydraulikanlagen, mit einer in einem Pumpengehäuse (1) um eine Drehachse (7) rotierend antreibbaren Zylindertrommel (3), in der Kolben (9) axial bewegbar angeordnet sind, die sich mit ihrem außerhalb der Zylindertrommel (3) zugänglichen Betätigungsende (11) an einer Schrägscheibe (15) zumindest mittelbar abstützen, die zur Einstellung des Hubes der Kolben (9) und damit des durch diese erzeugten Fluid-Systemdrucks in gewünschte Neigungswinkel relativ zur Drehachse (7) mittels einer Verstelleinrichtung (21) schwenkbar ist, die in einem hydraulisch betätigbaren Stellzylinder (31) einen Stellkolben (35) aufweist, dessen Bewegung über mindestens eine eine Gelenkstelle (37, 39; 29, 43) aufweisende getriebliche Verbindung auf die Schrägscheibe (15) übertragbar ist, wobei die Gelenkstelle durch ein zwischen Stellkolben (35) und Kolbenstange (41) des Stellzylinders (31) befindliches Kugelgelenk (37, 39) gebildet ist, wobei eine zweite Gelenkstelle durch ein zweites Kugelgelenk (29, 43) zwischen der Kolbenstange (41) und einem Betätigungsteil der Schrägscheibe (15) gebildet ist, wobei ein zweiter Stellzylinder (45) vorhanden ist, der mit gemeinsamer, zur Drehachse (7) senkrechter Zylinderachse dem ersten Stellzylinder (31) gegenüberliegt, wobei der Stellkolben (47) des zweiten Stellzylinders (45) hydraulisch entgegen der Bewegung des Stellkolbens (35) des ersten Stellzylinders (31) bewegbar ist und wobei die Kolbenstange (55) des zweiten Stellzylinders (45) am einen Ende über ein drittes Kugelgelenk (51, 53) mit dem zugehörigen Stellkolben (47) in Verbindung ist und am anderen Ende zusammen mit der Kolbenstange (41) des ersten Stellzylinders (31) das zweite Kugelgelenk (29, 43, 57) am Betätigungsteil der Schrägscheibe (15) ausbildet, **dadurch gekennzeichnet, dass** das Kugelgelenk am Betätigungsteil, welches in Form eines mit der Schrägscheibe (15) verbundenen Schwenkhebels (23) gebildet ist, durch einen am freien Ende des Schwenkhebels (23) befindlichen Kugelkopf (29) und durch kalottenförmige Flächen gebildet ist, die an den zugeordneten Enden der Kolbenstangen (41, 55) ausgebildet sind und Kugelpfannen (43, 57) bilden.

2. Axialkolbenpumpe nach Anspruch 1, **dadurch gekennzeichnet, dass** eine Kugelkopf (29, 39) und Kugelpfanne (37, 43) der Kugelgelenke kraftschlüssig in Anlage haltende Federanordnung (61) vorgesehen ist.

3. Axialkolbenpumpe nach Anspruch 1 oder 2, **dadurch gekennzeichnet, dass** die Federanordnung (61) die Schrägscheibe (15) in die der maximalen Pumpenförderung entsprechende Schwenkstellung vorspannt.

4. Axialkolbenpumpe nach einem der vorstehenden Ansprüche, **dadurch gekennzeichnet, dass** das Betätigungsteil durch einen mit der Schrägscheibe (15) verbundenen Schwenkhebel (23) gebildet ist, der sich seitlich der Schrägscheibe (15) und der Zylindertrommel (3) bei der Einstellung auf Null-Pumpenförderung parallel zur Drehachse (7) erstreckt und an dessen freiem Ende sich das zweite Kugelgelenk (29, 43, 57) befindet.

5. Axialkolbenpumpe nach einem der vorstehenden Ansprüche, **dadurch gekennzeichnet, dass** die Federanordnung eine Druckfeder (61) aufweist, die die Kolbenstange (55) des zweiten Stellzylinders (45) für die Bewegung vorspannt, die dem Ausfahren des Stellkolbens (49) des zweiten Stellzylinders (45) und dem Einfahren des Stellkolbens (35) des ersten Stellzylinders (31) und damit dem Schwenken des Schwenkhebels (23) aus der achsparallelen Stellung in Richtung auf die Stellung der maximalen Pumpenförderung entspricht.

6. Axialkolbenpumpe nach einem der vorstehenden Ansprüche, **dadurch gekennzeichnet, dass** der erste Stellzylinder (31) mit einem Steuerdruck für die Einstellung der Pumpenförderung und der zweite Stellzylinder (45) mit dem herrschenden Systemdruck beaufschlagbar sind.

7. Axialkolbenpumpe nach einem der vorstehenden Ansprüche, **dadurch gekennzeichnet, dass** die vom Steuerdruck beaufschlagbare Kolbenfläche des Kolbens (35) des ersten Stellzylinders (31) größer gewählt ist als die vom Systemdruck beaufschlagbare Kolbenfläche des Kolbens (49) des zweiten Stellzylinders (45).

8. Axialkolbenpumpe nach einem der vorstehenden Ansprüche, **dadurch gekennzeichnet, dass** die Kugelgelenke an den Stellkolben (35, 49) durch eine Kugelpfanne (37, 51) am jeweiligen Kolben (35, 49) und einen Kugelkopf (39, 53) an der Kolbenstange (41, 55) gebildet sind.

9. Axialkolbenpumpe nach einem der vorstehenden Ansprüche, **dadurch gekennzeichnet, dass** in dem vom Systemdruck beaufschlagbaren Kolben (49) eine durchgehende Schmiermittelbohrung (67) gebildet ist, die den Eingang eines Schmiermittelkanals (69, 71, 73) für die Schmierung der Kugelgelenke bildet.

## Claims

1. An axial piston pump in a swashplate design, in particular for hydraulic systems, with a cylinder drum (3) which can be driven to rotate about a rotational axis (7) in a pump housing (1) and in which pistons (9) are disposed in an axially movable manner, its actuating end (11), which is accessible outside of the cylinder drum (3), at least indirectly abutting a swashplate (15) which can be pivoted by means of an adjusting device (21) to the desired angle of inclination relative to the rotational axis (7) to adjust the stroke of the pistons (9), and so of the thereby-generated fluid system pressure, which adjusting device has an adjusting piston (35) in a hydraulically actuatable adjusting cylinder (31), the movement of which can be transferred to the swashplate (15) by means of at least one gearing connection that has a joint (37, 39; 20, 43), the joint being formed by a ball joint (37, 39) located between the adjusting piston (35) and the piston rod (41) of the adjusting cylinder (31), a second joint being formed by a second ball joint (29, 43) between the piston rod (41) and an actuating part of the swashplate (15), a second adjusting cylinder (45) being provided which, with the common cylinder axis perpendicular to the rotational axis (7), lies opposite the first adjusting cylinder (31), the adjusting piston (47) of the second adjusting cylinder (45) being able to be moved hydraulically against the movement of the adjusting piston (35) of the first adjusting cylinder (31), and the piston rod (55) of the second adjusting cylinder (45) being connected at one end to the corresponding adjusting piston (47) by a third ball joint (51, 53), and on the other end forming together with the piston rod (41) of the first adjusting cylinder (31) the second ball joint (29, 43, 57) on the actuating part of the swashplate (15), **characterised in that** the ball joint on the actuating part, which is made in the form of a pivot lever (23) connected to the swashplate (15), is formed by a ball head (29) located on the free end of the pivot lever (23) and by dome-shaped surfaces which are formed on the assigned ends of the piston rods (41, 55) and form ball sockets (43, 57).

2. The axial piston pump according to Claim 1, **characterised in that** a ball head (29, 39) and a ball socket (37, 43) of the ball joints are provided in a spring assembly (61) holding them in position in a force-locking manner.

3. The axial piston pump according to Claim 1 or 2, **characterised in that** the spring assembly (61) pre-loads the swashplate (15) into the pivot position corresponding to the maximum pump delivery.

4. The axial piston pump according to any of the preceding claims, **characterised in that** the actuating part is formed by a pivot lever (23) connected to the swashplate (15), which lever extends laterally to the swashplate (15) and the cylinder drum (3) and parallel to the rotational axis (7) when set to zero pump delivery, and the second ball joint (29, 43, 57) is located at its free end.

5. The axial piston pump according to any of the preceding claims, **characterised in that** the spring assembly has a compression spring (61) which pre-loads the piston rod (55) of the second adjusting cylinder (45) for the movement which corresponds to the extension of the adjusting piston (49) of the second adjusting cylinder (45) and the retraction of the adjusting piston (35) of the first adjusting cylinder (31), and so the pivoting of the pivot lever (23) from the position in which the axes are parallel, toward the position for the maximum pump delivery.

6. The axial piston pump according to any of the preceding claims, **characterised in that** the first adjusting cylinder (31) can be subjected to a control pressure for adjusting the pump delivery, and the second adjusting cylinder (45) can be subjected to the prevailing system pressure.

7. The axial piston pump according to any of the preceding claims, **characterised in that** the piston surface of the piston (35) of the first adjusting cylinder (31), which can be subjected to control pressure, is selected such that it is larger than the piston surface of the piston (49) of the second adjusting cylinder (45) that can be subjected to the system pressure.

8. The axial piston pump according to any of the preceding claims, **characterised in that** the ball joints on the adjusting pistons (35, 49) are formed by a ball socket (37, 51) on the respective piston (35, 49) and a ball head (39, 53) on the piston rod (41, 55).

9. The axial piston pump according to any of the preceding claims, **characterised in that** in the piston (49) which can be subjected to system pressure, a continuous lubrication hole (67) is formed which forms the entrance of a lubrication channel (69, 71, 73) for the lubrication of the ball joints.

## Revendications

1. Pompe à piston axial du type à plateau en biais, notamment pour des installations hydrauliques, comprenant un tambour (3) cylindrique, qui peut être entraîné en rotation, autour d'un axe (7) de rotation, dans un corps (1) de pompe, et dans lequel sont montés mobiles axialement des pistons, qui, par leur extrémité (11) d'actionnement accessible à l'extérieur du tambour (3) cylindrique, s'appuient, au moins indirectement, sur un plateau (15) en biais, qui, pour le réglage de la course du piston (9) et ainsi de la pression du système de fluide produit par celui-ci, peut pivoter de l'angle d'inclinaison souhaité par rapport à l'axe (7) de rotation, au moyen d'un dispositif (21) de réglage, qui a, dans un vérin (31) de réglage pouvant être actionné hydrauliquement, un piston (35) de réglage, dont le déplacement peut, par au moins une liaison cinématique ayant un point (37, 39 ; 29, 43) d'articulation, être transmis au plateau (15) en biais, le point d'articulation étant formé par une rotule (37, 39) se trouvant entre le piston (35) de réglage et la tige (41) de piston du vérin (31) de réglage, un deuxième point d'articulation étant formé par une deuxième rotule (29, 43) entre la tige (41) du piston et une partie d'actionnement du plateau (15) en biais, dans lequel il est prévu un deuxième vérin (45) de réglage, qui, par un axe de vérin commun perpendiculaire à l'axe (7) de rotation, s'oppose au premier vérin (31) de réglage, le piston (47) de réglage du deuxième vérin (45) de réglage étant mobile hydrauliquement à l'encontre du déplacement du piston (35) de réglage du premier vérin (31) de réglage et la tige (55) de piston du deuxième vérin (45) de réglage étant à une extrémité par une troisième rotule (51, 53) en liaison avec le piston (47) de réglage associé et constituant, à l'autre extrémité, ensemble avec la tige (41) de piston du premier vérin (31) de réglage, la deuxième rotule (29, 43, 57) à la partie d'actionnement du plateau (15) en biais, **caractérisée en ce que** la rotule à la partie d'actionnement, qui a la forme d'un levier (23) pivotant relié au plateau (15) en biais, est formée par une tête (29) de sphère se trouvant à l'extrémité libre du levier (23) pivotant et par des surfaces en forme de calottes, qui sont constituées aux extrémités associées des tiges (41, 55) de piston et qui forment des crapaudines (43, 57).

2. Pompe à piston axial suivant la revendication 1, **caractérisée en ce qu'**il est prévu un agencement (61) de ressort, maintenant en contact à force une tête (29, 39) de sphère et une crapaudine (37, 43) de la rotule.

3. Pompe à piston axial suivant la revendication 1 ou 2, **caractérisée en ce que** l'agencement (61) de ressort précontraint le plateau (15) en biais dans la position de pivotement correspondant au refoulement maximum de la pompe.

4. Pompe à piston axial suivant l'une des revendications précédentes, **caractérisée en ce que** la partie d'actionnement est formée par un levier (23) pivotant, qui est relié au plateau (15) en biais, qui s'étend parallèlement à l'axe (7) de rotation, latéralement au plateau (15) en biais et au tambour (3) cylindrique lors du réglage du refoulement de la pompe à zéro et à l'extrémité libre duquel se trouve la deuxième rotule (29, 43, 57).

5. Pompe à piston axial suivant l'une des revendications précédentes, **caractérisée en ce que** l'agencement de ressort comporte un ressort (61) de compression, qui précontraint la tige (55) de piston du deuxième vérin (45) de réglage, pour le mouvement qui correspond à la sortie du piston (49) de réglage du deuxième vérin (45) de réglage et à l'entrée du piston (35) de réglage du premier vérin (31) de réglage et ainsi au pivotement du levier (23) pivotant, en dehors de la position parallèle à l'axe, en direction de la position du refoulement maximum de la pompe.

6. Pompe à piston axial suivant l'une des revendications précédentes, **caractérisée en ce que** le premier vérin (31) de réglage peut être alimenté en une pression de commande pour le réglage du refoulement de la pompe et le deuxième vérin (45) de réglage en la pression régnante du système.

7. Pompe à piston axial suivant l'une des revendications précédentes, **caractérisée en ce que** la surface, pouvant être soumise à la pression de commande, du piston (35) du premier vérin (31) de réglage est choisie plus grande que la surface, pouvant être soumise à la pression du système, du piston (49) du deuxième vérin (45) de réglage.

8. Pompe à piston axial suivant l'une des revendications précédentes, **caractérisée en ce que** les rotules sont formées, sur les pistons (35, 49) de réglage, par une crapaudine (37, 51) sur le piston (35, 49) respectif et une tête (39, 53) de sphère sur la tige (41, 55) de piston.

9. Pompe à piston axial suivant l'une des revendications précédentes, **caractérisée en ce que**, dans le piston (49), pouvant être soumis à la pression du système, est formé un trou (67) traversant pour du lubrifiant, qui forme l'entrée d'un conduit (69, 71, 73) pour du lubrifiant, afin de lubrifier les rotules.
